# EUROPÄISCHE PATENTSCHRIFT

(11) **EP 2 434 311 B1**
(45) Veröffentlichungstag und Bekanntmachung des Hinweises auf die Patenterteilung: **16.07.2014**
(21) Anmeldenummer: 10010900.8
(22) Anmeldetag: 27.09.2010
(51) Int. Cl.: G01S 17/00, G01S 17/02, G01S 7/497, G01V 8/20

(54) **Verfahren zur optischen Überwachung eines Überwachungsbereiches und Reflexions-Lichttaster**
Method for optical monitoring of a surveillance area and reflection light probe
Procédé de surveillance optique d'un domaine de surveillance et senseur lumineux à réflexion

(43) Veröffentlichungstag der Anmeldung: 28.03.2012
(73) Patentinhaber: SICK AG, 79183 Waldkirch/Breisgau (DE)
(72) Erfinder: Klein, Michael, 79183 Waldkirch (DE); Märkle, Christoph, 72379 Freiburg (DE)
(74) Vertreter: Manitz, Finsterwald & Partner GbR

(56) Entgegenhaltungen:
- EP-A1- 0 685 748
- EP-A1- 2 163 917
- EP-A2- 0 491 118
- DE-A1- 3 627 972
- DE-A1- 3 729 334
- US-A- 4 814 810
- US-A- 5 613 167
- US-A- 5 754 281
- US-B1- 6 498 333

## Beschreibung

Die Erfindung betrifft ein Verfahren zur optischen Überwachung eines Überwachungsbereiches, bei dem Licht in den Überwachungsbereich gesendet wird und aus dem Überwachungsbereich zurückreflektiertes bzw. zurückremittiertes Licht mit einem ersten und einem zweiten Lichtempfänger detektiert wird, die jeweils zwei räumliche Detektionszonen für den Tastbereich und den Hintergrundbereich des Überwachungsbereiches aufweisen. Die Erfindung betrifft weiterhin einen Lichttaster zur Durchführung eines solchen Verfahrens

Lichttaster werden eingesetzt, um Objekte zu detektieren, die sich in einem Überwachungsbereich befinden. Dabei wird Licht durch eine Sendeoptik in den Überwachungsbereich geschickt. Von einem gegebenenfalls in dem Überwachungsraum befindlichen Objekt wird das Licht zurückreflektiert oder zurückremittiert und von einem Lichtempfänger empfangen, der sich z.B. benachbart zu dem Sender und beabstandet davon befinden kann. Das zurückreflektierte bzw. zurückremittierte Licht tritt auf seinem Weg zu dem Lichtempfänger durch eine Empfangsoptik, die es räumlich begrenzt. Je nachdem, ob das Objekt näher oder weiter entfernt von der Sende/Empfangsanordnung ist, trifft nach dem Triangulationsprinzip das zurückreflektierte bzw. zurückremittierte Licht an einer anderen Stelle auf den Lichtempfänger. Lässt sich mit dem Lichtempfänger eine Ortsinformation über das auftreffende Licht messen, kann darauf geschlossen werden, ob sich das Objekt näher oder weiter entfernt von der Sende/Empfangsanordnung befindet: So kann der Lichtempfänger z.B. zwei Detektionszonen aufweisen, von denen eine von Licht getroffen wird, wenn sich das Objekt in einem Fernbereich findet und die andere Detektionszone von Licht getroffen wird, wenn sich das Objekt in einem Nahbereich befindet. Die zwei Detektionszonen können z.B. durch jeweils eine oder mehrere Elemente einer Fotodiodenreihe gebildet sein.

Als Ausgangssignal eines Lichtempfängers kann z.B. die Differenz der Fotoströme dienen, die die beiden Detektionszonen liefern. Fällt das zurückreflektierte/zurückremittierte Licht vollständig auf eine Detektionszone, so ist deren Fotostrom maximal und der Fotostrom der anderen Detektionszone gleich Null. Aus dem Vorzeichen der Fotostromdifferenz lässt sich daraus schließen, ob sich das detektierte Objekt im Vordergrund oder im Hintergrund des Überwachungsraumes befindet.

Andererseits werden positionssensitive Elemente (Engl.: position sensitive devices, PSD) eingesetzt, die je nach Auftreffpunkt des Lichtflecks ein anderes Stromsignal liefern.

Der Lichtfleck, der auf den Lichtempfänger fällt, hat in der Regel eine gewisse Ausdehnung. Durch die Auswertemethode ist sichergestellt, dass der Lichtfleck derjenigen Detektionszone zugeordnet wird, in der der Schwerpunkt des Lichtflecks liegt.

Mit einem solchen Detektionsverfahren ist eine Erkennung möglich, ob sich ein diffus reflektierendes und/oder homogenes Objekt im Nahbereich des Überwachungsraums befindet.

Kontrastreiche Objekte reflektieren bzw. remittieren das Licht an unterschiedlichen Oberflächenbereichen unterschiedlich stark. Dieser Effekt führt zu einer Verschiebung des Strahlungsschwerpunkts des zurückreflektierten/zurückremittierten Lichts. Diese Verschiebung kann die an dem Lichtempfänger gemessene Lageinformation verfälschen. Bekannte Verfahren schlagen als Lösung dazu vor, dass symmetrisch zu dem Sendeelement zwei gleichartige Empfängerelemente mit entsprechenden Empfängeroptiken angeordnet sind. Die resultierenden Messsignale der Lichtempfängerelemente werden addiert. Nachdem die Schwerpunktverschiebung durch ein kontrastreiches Objekt an beiden Empfängerelementen zu einer Verschiebung des Lichtschwerpunkts in derselben räumlichen Richtung erfolgt, bewirkt die durch den Kontrast bewirkte Verschiebung des Lichtschwerpunkts auf dem einen Lichtempfangselement eine Verschiebung des Schwerpunkts in Richtung der Detektionszone für den Nahbereich und an dem anderen Empfängerelement eine Verschiebung des Lichtschwerpunkts in die Detektionszone für den Fernbereich. Die Größe der Verschiebung ist aber gleich, so dass eine Addition der Fotoströme der beiden Lichtempfänger zu einer Kompensation des durch den Kontrast des Objekts hervorgerufenen Effekts führt.

Solche Anordnungen mit zwei positionssensitiven Empfangselementen auf gegenüberliegenden Seiten des Sendeelements, wobei die gemessenen Ströme der positionssensitiven Elemente addiert werden, sind z.B. aus US 5,613,167, US 5,754,281 oder US 4,814,810 bekannt.

DE 37 29 334 beschreibt eine Anordnung, bei der die Messsignale von den zwei Detektionszonen addiert werden, die dem Tastbereich des Überwachungsbereichs entsprechen, während die Detektionszonen für den Hintergrundbereich durch ein gemeinsames Fotodiodenelement gebildet werden. Bei diesem bekannten Verfahren werden dementsprechend zum einen die Signale der jeweils ersten Detektionszonen elektronisch zusammengefasst und zum anderen die Signale der jeweils zweiten Detektionszonen zusammengefasst, indem sie durch eine gemeinsame zweite Detektionszone gebildet werden.

Ein Überwachungsverfahren mit den Merkmalen des Oberbegriffs des Anspruchs 1 ist aus DE 36 27 972 A1 bekannt.

Anderer Stand der Technik ist in US 6,498,333 B1, EP 0 491 118 A2, EP 2 163 914 A1 und EP 0 685 748 A1 beschrieben.

Es ist die Aufgabe der vorliegenden Erfindung, ein verbessertes Verfahren zur Überwachung eines Überwachungsbereichs und einen verbesserten Lichttaster anzugeben, mit denen eine noch robustere Detektion von Objekten möglich ist, die noch weniger von der Oberflächenbeschaffenheit des zu detektierenden Objekts abhängt, und insbesondere eine robuste Detektion von Objekten mit spiegelnden oder mehrfach spiegelnden Oberflächen ermöglichen.

Diese Aufgabe wird mit einem Verfahren zur Überwachung eines Überwachungsraums mit den Merkmalen des Anspruchs 1 oder den Merkmalen des Anspruchs 2 bzw. mit einem Lichttaster mit den Merkmalen des Anspruchs 5 gelöst. Unteransprüche sind auf bevorzugte Ausführungsformen und Ausgestaltungen gerichtet.

Erfindungsgemäß wird ein erstes Ausgangssignal des ersten Lichtempfängers in Abhängigkeit davon erzeugt, ob sich der Schwerpunkt des zurückreflektierten/zurückremittierten Lichts in der ersten oder der zweiten Detektionszone des ersten Lichtempfängers befindet. Das Ausgangssignal ist dabei so gestaltet, dass es nur einen von zwei möglichen Zuständen annehmen kann. Auf die gleiche Weise wird ein zweites Ausgangssignal des zweiten Lichtempfängers erzeugt, der sich auf der anderen Seite des Sendelichtpfades befindet. Jeder der Lichtempfänger liefert also ein Ausgangssignal, das nur zwei Zustände annehmen kann. Nur der Einfachheit der Darstellung halber werden diese zwei Zustände der Ausgangssignale im Folgenden auch als "positiv" und "negativ" bzw. "ON" und "OFF" bezeichnet.

Die beiden Ausgangssignale werden logisch miteinander verknüpft, um ein Objektfeststellungssignal zu erzeugen. Ein positives Objektfeststellungssignal stellt dabei ein Signal dar, das auf die Anwesenheit eines Objektes im Tastbereich schließen lässt. Ein negatives Objektfeststellungssignal gibt an, dass kein Objekt im Tastbereich ist.

Die beiden Lichtempfänger werden also zunächst komplett getrennt ausgewertet und dann erst die Ausgangssignale gemeinsam verwendet. Im Gegensatz zu bekannten Lösungen wird also hier keine Addition der Fotodiodenströme der einzelnen Lichtempfänger vor der Signalauswertung durchgeführt. Während bei bekannten Lösungen eine betragsmäßig identische Verschiebung beider Lichtschwerpunkte auf beiden Empfängern notwendig ist, um den Effekt eines kontrastreichen oder anderweitig kritischen Objekts auf die Schwerpunktlage des zurückreflektierten/zurückremittierten Lichts zu kompensieren, ist eine solche betragsmäßige Identität - die bei gerichteter Remission (bzw. Reflexion) an spiegelnden Oberflächen nicht gegeben ist - bei dem erfindungsgemäßen Verfahren nicht notwendig.

Im Folgenden werden Objekte als kritisch bezeichnet, wenn sie z.B. kontrastreich sind, spiegelnde Oberflächen aufweisen oder ihre Oberflächen nicht plan sind und teilweise Glanzanteile aufweisen. Als unkritisch werden Objekte eingestuft, die homogene, diffus reflektierende bzw. remittierende Oberflächen haben.

Ebenso wird ein Hintergrund als kritisch eingestuft, wenn er z.B. sehr rau ist und teilweise Glanzanteile aufweist oder kontrastreich ist. Als unkritisch wird ein Hintergrund z.B. eingestuft, wenn er im Wesentlichen homogen ist und diffus reflektiert. Es kann sich dabei z.B. um gleichförmiges Förderband handeln, auf dem die Objekte durch den Tastbereich des Überwachungsbereiches transportiert werden.

Das Verfahren eignet sich z.B. vorteilhaft, um ein System mit Hintergrundausblendung zu realisieren. In diesem Fall wird von den einzelnen Lichtempfängern jeweils ein positives Ausgangssignal erzeugt, wenn zurückreflektiertes/zurückremittiertes Licht auf die erste Detektionszone des zugehörigen Lichtempfängers fällt, die einem Tastbereich des Überwachungsbereichs entspricht. Ein negatives Ausgangssignal des jeweiligen Lichtempfängers wird erzeugt, wenn das zurückreflektierte/zurückremittierte Licht auf die zweite Detektionszone des zugehörigen Lichtempfängers fällt, die dem Hintergrundbereich entspricht. Ein jeweils positives Ausgangssignal wird also erzeugt, wenn sich ein Gegenstand vor dem Hintergrund befindet, ein jeweils negatives Ausgangssignal, wenn sich kein Gegenstand vor dem Hintergrund befindet.

Sollen z.B. kritische Objekte vor einem im Wesentlichen unkritischen, also homogenen Hintergrund detektiert werden, kann zum Beispiel eine ODER-Verknüpfung als logische Verknüpfung gewählt werden, wobei ein positives Objektfeststellungssignal erzeugt wird, wenn wenigstens ein Ausgangssignal positiv ist und ein negatives Objektfeststellungssignal erzeugt wird, wenn beide Ausgangssignale negativ sind.

Befindet sich kein Objekt vor dem unkritischen Hintergrund, so werden beide Lichtempfänger negative Ausgangssignale liefern, da der unkritische Hintergrund von beiden Lichtempfängern unabhängig richtig erkannt wird. Befindet sich ein kritisches Objekt vor dem Hintergrund im Tastbereich, so werden die beiden Empfangselemente dadurch möglicherweise unterschiedlich beeinflusst. Ist die Oberflächenbeschaffenheit des Objekts derart, dass trotzdem beide Lichtempfänger ein positives Ausgangssignal liefern, so wird korrekterweise angezeigt, dass sich ein Objekt im Tastbereich befindet. Durch die gewählte logische Verknüpfung ist jedoch sichergestellt, dass ein kritisches Objekt vor einem unkritischen Hintergrund auch dann als anwesend detektiert wird, wenn nur ein Lichtempfänger ein positives Ausgangssignal liefert.

Bekannte Anordnungen verwenden eine UND-Verknüpfung als logische Verknüpfung der Ausgangssignale der Lichtempfänger, bei der ein positives Objektfeststellungssignal erzeugt werden soll, wenn beide Ausgangssignale positiv sind, und ein negatives Objektfeststellungssignal erzeugt wird, wenn wenigstens ein Ausgangssignal negativ ist.

Erfindungsgemäß kommt eine logische Verknüpfung nach Art einer FLIP-FLOP-Verknüpfung zum Einsatz, bei der ein positives Objektfeststellungssignal erzeugt wird, sobald beide Ausgangssignale einmalig positiv sind, und ein negatives Objektfeststellungssignal erzeugt wird, sobald beide Ausgangssignale einmalig negativ sind. Dies erweist sich insbesondere als vorteilhaft, wenn ein in seiner Oberflächenbeschaffenheit kritisches Objekt vor einem als kritisch einzustufenden Hintergrund detektiert werden soll.

Beispiele für Wirkungweisen werden weiter unten in der Figurenbeschreibung im Detail erläutert.

Das erfindungsgemäße Verfahren kann auch eingesetzt werden, wenn ein anderer Detektionsmodus vorgesehen sein soll. So ist es z.B. möglich, dass die Lichtempfänger so gewählt werden, dass jeweils ein positives Ausgangssignal erzeugt wird, wenn der Schwerpunkt des zurückreflektierten/zurückremittierten Lichts auf die zweite Detektionszone des zugehörigen Lichtempfängers fällt, die dem Hintergrundbereich entspricht. Ein negatives Ausgangssignal wird jeweils erzeugt, wenn der Schwerpunkt zurückreflektierten/zurückremittierten Lichts auf die erste Detektionszone des zugehörigen Lichtempfängers fällt, das dem Tastbereich entspricht. Jeder der Lichtempfänger für sich erzeugt also ein positives Signal, wenn der Hintergrund sichtbar ist, und ein negatives Signal, wenn sich ein diffus reflektierendes und homogenes Objekt vor dem Hintergrund befindet.

Ein solcher Detektionsmodus ist zudem vorteilhaft, wenn kritische Objekte vorliegen können, die einen so hohen spiegelnden Anteil haben, dass die verbleibende Restremission bzw. die verbleibende diffuse Reflexion für eine verlässliche Messung nach dem Triangulationsprinzip nicht sicher ausreichen würde.

Soll bei einem solchen Detektionsmodus ein kritisches Objekt vor einem unkritischen Hintergrund detektiert werden, so kann als logische Verknüpfung zum Beispiel eine ODER-Verknüpfung gewählt werden, wobei ein positives Objektfeststellungssignal erzeugt wird, wenn wenigstens eines der Ausgangssignale negativ ist, und ein negatives Objektfeststellungssignal erzeugt wird, wenn beide Ausgangssignale positiv sind. Befindet sich kein Objekt im Tastbereich vor dem unkritischen Hintergrund, so werden die beiden Lichtempfänger korrekterweise positive Ausgangssignale erzeugen, so dass insgesamt ein negatives Objektfeststellungssignal entsteht. Ist jedoch eines der Ausgangssignale negativ, so wird ein positives Objektfeststellungssignal erzeugt, weil sich offensichtlich ein kritisches Objekt vor dem Hintergrund befindet.

Erfindungsgemäß wird auch in einem solchen Detektionsmodus eine FLIP-FLOPartige Verknüpfung eingesetzt. Applikationsszenarien werden weiter unten im Rahmen der Figurenbeschreibung anhand eines Beispiels erläutert.

Der Tastbereich und der Hintergrundbereich können zum Beispiel in einem Teach-Prozess (also einem Konfigurationsprozess) im Vorhinein festgelegt werden. Dazu wird zum Beispiel die Trennlinie zwischen dem Tastbereich und dem Hintergrundbereich (zum Beispiel durch Einstellung der Detektionszonen) elektronisch eingestellt. Ein diffus reflektierendes bzw. zurückremittierendes Objekt kann dazu in den Abstand der gewünschten Trennlinie zwischen Tastbereich und Hintergrundbereich gebracht werden und die Detektionszonen des ersten Lichtempfängers und die Detektionszonen des zweiten Lichtempfängers derart eingestellt werden, dass das von dem Objekt im Abstand der gewünschten Trennlinie über die Empfangslichtpfade zurückreflektierte/zurückremittierte Licht auf die jeweilige Grenze zwischen der ersten und der zweiten Detektionszone fällt.

Ein erfindungsgemäßer Lichttaster weist eine erste Auswerteeinrichtung zur Bildung des ersten Ausgangssignals aus dem Messsignal des ersten Lichtempfängers auf. Aus dem Messsignal des Lichtempfängers, also z.B. des Fotostroms, bildet die Auswerteeinrichtung also das erste Ausgangssignal, das nur zwei mögliche Zustände annehmen kann. Auf die gleiche Art und Weise bildet eine zweite Auswerteeinrichtung das zweite Ausgangssignal aus dem Messsignal des zweiten Lichtempfängers.

Grundsätzlich ist es auch möglich, dass mehrere Lichtempfängerpaare zum Einsatz kommen, die auf unterschiedlichen Seiten des Sendeelements angeordnet sind und paarweise in beschriebener Weise ausgewertet werden.

Der erfindungsgemäße Lichttaster weist außerdem eine Logikeinheit auf, die das erste und das zweite Ausgangssignal zur Erzeugung eines Objektfeststellungssignals zum Beispiel in beschriebener Weise miteinander verknüpft. Das Objektfeststellungssignal kann dann z.B. ausgegeben werden, um eine Information an einen Benutzer zu geben oder ein Warnsignal oder Stoppsignal zu erzeugen.

Die erste und die zweite Auswerteeinrichtung können in einer gemeinsamen Auswerteeinrichtung zusammengefasst sein, die z.B. durch einen entsprechenden Prozessor gebildet wird. Die Logikeinheit kann ebenfalls in einer solchen gemeinsamen Auswerteeinheit integriert sein.

Die Empfangslichtpfade können zum Beispiel durch Blenden oder Linsen festgelegt sein, die das zurückreflektierte/zurückremittierte Licht räumlich begrenzen. Sie können als gesonderte Elemente ausgebildet sein oder als gemeinsames, zum Beispiel ringförmiges Element um die Sendelichtsystemachse angeordnet sein. Vorteilhafterweise befinden sich zwei Empfangsoptiken zur räumlichen Festlegung der Empfangslichtpfade symmetrisch an gegenüberliegenden Seiten des Sendelichtpfades.

Die Vorteile eines erfindungsgemäßen Lichttasters, vorteilhafte Ausführungen und deren Vorteile ergeben sich aus der obigen Schilderung der Vorteile des erfindungsgemäßen Verfahrens und dessen vorteilhafter Ausgestaltungen.

Im Folgenden wird das erfindungsgemäße Verfahren anhand der beiliegenden schematischen Figur im Detail erläutert.

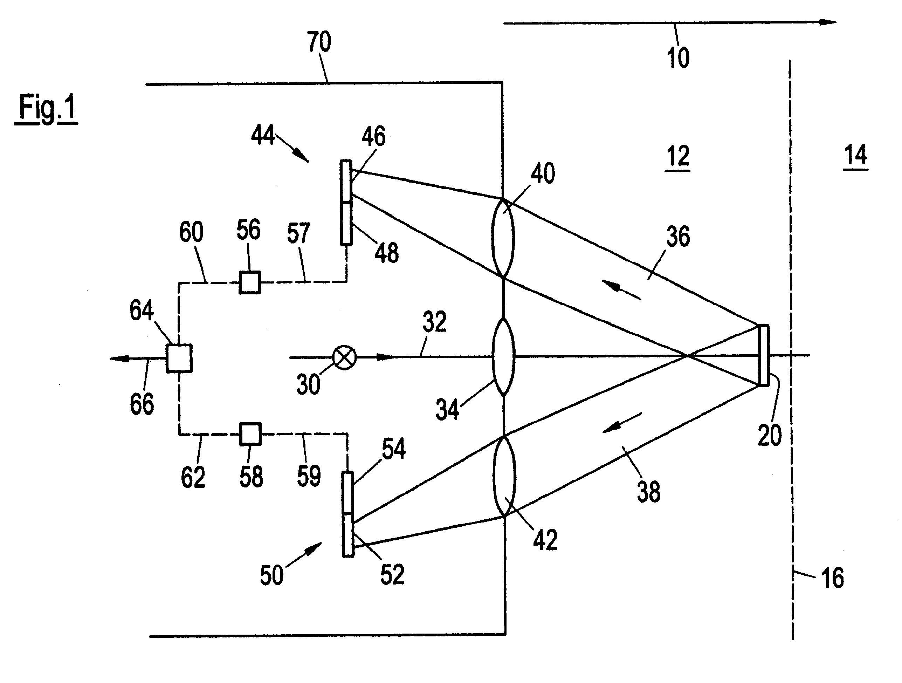

- Fig. 1: zeigt eine schematische Darstellung einer Ausführungsform eines erfindungsgemäßen Lichttasters.

Gezeigt ist in schematischer Darstellung ein Lichttaster zur Überwachung eines Überwachungsbereiches 10. Bei der dargestellten Ausführungsform setzt sich der Überwachungsbereich 10 aus einem Tastbereich 12 und einem Hintergrundbereich 14 zusammen, die von einer gedachten Trennlinie 16 getrennt sind. Geprüft werden soll, ob sich ein Objekt im Vordergrundbereich befindet, bzw. ob dieser frei ist. Der Vordergrundbereich entspricht daher hier dem Tastbereich.

Im Tastbereich 12 befindet sich ein zu detektierendes Objekt 20. Dabei kann es sich z.B. um ein Objekt 20 handeln, das auf einem Förderband transportiert wird, das entlang der gedachten Trennlinie 16 läuft. In einem solchen Fall wird der Hintergrundbereich 14 gar nicht untersucht werden, da der Hintergrund durch das Förderband gebildet wird. Andere Anwendungen sind z.B. derart, dass der Tastbereich durch ein Regalfach gebildet wird, wobei festgestellt werden soll, ob darin ein Objekt gelagert ist oder nicht. Der Hintergrundbereich wird dann z.B. von der Rückwand des Regalfachs oder von einem sich anschließenden Regalfach, einem Regalgestell oder ähnlichem gebildet. Auch für eine solche Anwendung ist nur von Interesse, ob sich in dem Tastbereich, also in dem hier betrachteten Regalfach, ein Gegenstand befindet.

Die gezeigte Ausführungsform weist ein Sendeelement 30, z.B. eine Leuchtdiode, auf, die durch eine Sendeoptik 34, z.B. durch eine Linse, in den Überwachungsbereich leuchtet. Die gedachte Linie 32, die durch das Sendeelement 30 und die Sendeoptik 34 hindurchgeht, wird im Folgenden als Sendelichtsystemachse bezeichnet, wobei das Sendelichtsystem die Gesamtheit aus Sendeelement 30 und Sendeoptik 34 umfasst. Das Sendelicht fällt auf das Objekt 20 und wird von diesem zurückreflektiert bzw. zurückremittiert. Dasjenige zurückreflektierte bzw. zurückremittierte Licht, das durch die hier auch als Linse dargestellten Empfangsoptiken 40, 42 fällt, ist mit 36, 38 bezeichnet. Das Empfangslicht 36, 38 fällt auf die positionssensitiven Fotoelemente 44, 50. Das Element 44 weist eine erste Detektionszone 46 und eine zweite Detektionszone 48 auf, während das Element 50 eine erste Detektionszone 52 und eine zweite Detektionszone 54 aufweist. Stammt das zurückreflektierte bzw. zurückremittierte Licht von einem Objekt 20 im Tastbereich 12 des Überwachungsbereichs 10, fällt das Licht jeweils auf die erste Detektionszone 46, 52, wenn das Objekt im Wesentlichen homogen und diffus reflektierend ist. Befände sich in hier nicht dargestellter Weise das Objekt im Hintergrundbereich 14 bzw. würde das Licht ohne durch ein Objekt gestört zu werden, z.B. auf ein Förderband fallen, das sich an der gedachten Trennlinie 16 befindet, würde das Empfangslicht 36, 38 auf die jeweils zweite Detektionszone 48, 54 fallen.

Die positionssensitiven Elemente 44, 50 liefern als Messsignale 57, 59 Fotoströme, die davon abhängig sind, an welcher Stelle das Licht auftrifft. Die Messsignale 57, 59 werden an Auswerteeinrichtungen 56, 58 geliefert, die aus den Fotostromsignalen 57, 59 Ausgangssignale 60, 62 erzeugen, die jeweils nur zwei Zustände ("ON" oder "OFF") erzeugen. Für jedes einzelne fotosensitive Element 44, 50 wird also durch die zugehörige Auswerteeinheit 56, 58 eine vollständige Auswertung durchgeführt, die zu einem Ausgangssignal 60, 62 für jedes einzelne fotosensitive Element 44, 50 führen, das entweder "ON" oder "OFF" lautet. Diese insofern binären Ausgangssignale 60, 62 werden an eine Logikeinheit 64 gegeben, die sie logisch miteinander verknüpft. Die Logikeinheit 64 erzeugt aus der logischen Verknüpfung der Ausgangssignale 60, 62 ein Objektfeststellungssignal 66.

Die Komponenten des Lichttasters können in einem Gehäuse 70 zusammengefasst sein.

Die Wirkungsweise eines erfindungsgemäßen Lichttasters und des erfindungsgemäßen Verfahrens wird anhand folgender Beispiele im Detail erläutert.

Betrachtet wird ein Beispiel, bei dem Objekte 20 auf einem Förderband transportiert werden, das sich entlang der gedachten Trennlinie 16 bewegt. Ein kritisches Objekt ist dabei z.B. ein Objekt, das glänzend verpackt ist, eine raue Oberfläche mit teilweise spiegelnd reflektierenden Bereichen aufweist oder das starke Kontraste aufweist. Ein unkritisches Objekt weist eine diffus reflektierende und homogene Oberfläche auf.

Ein unkritischer Hintergrund wird z.B. von einem homogenen und diffus reflektierenden Förderband gebildet. Hat das Förderband jedoch z.B. teilweise metallische Bereiche oder Bereiche mit starken Kontrastunterschieden, so handelt es sich um einen kritischen Hintergrund.

Ein erfindungsgemäßer Lichttaster kann z.B. eingesetzt werden, um ein Objektfeststellungssignal 66 zu erzeugen, das angibt, ob sich ein Objekt 20 im Tastbereich 12 befindet, also ob sich ein Objekt auf dem Förderband 16 befindet. Bewegt sich das Förderband, kann ein solches Objektfeststellungssignal z.B. zum Zählen von Objekten benutzt werden, die auf dem Förderband an dem Lichttaster vorbei transportiert werden. Andere Anwendungen sehen vor, dass ein Signal ausgegeben wird, das die Abwesenheit eines Objekts 20 im Tastbereich 12 angibt.

In Fig. 1 ist ein Zustand gezeigt, in dem das Objekt 20 im Tastbereich 12 unkritisch ist. Das jeweilige Empfangslicht 36, 38 fällt jeweils auf die erste Detektionszone 46, 52. Würde allerdings das Objekt 20 eine kritische Oberfläche haben, kann der Schwerpunkt des Empfangslichts verschoben sein. Diese Verschiebung findet an beiden positionssensitiven Elementen 44, 50 in dieselbe Richtung, also z.B. in der Figur nach unten statt. In einem solchen Fall würde sich der Schwerpunkt des Lichts am in Fig. 1 oberen positionssensitiven Element 44 gegebenenfalls in die zweite Detektionszone 48 verschieben, während sie bei dem positionssensitiven Element 50 in derselben Detektionszone 52 verbleibt. Hat das Objekt 20 z.B. zumindest teilweise spiegelnd reflektierende Bereiche und ist nicht symmetrisch angeordnet, so wird das eine positionssensitive Element gegebenenfalls von mehr zurückreflektiertem Licht getroffen als das andere. Dasselbe gilt z.B. für Objekte 20 mit inhomogener Oberfläche oder unregelmäßig angeordneten Glanzbereichen.

In einem solchen Fall würde die Auswertung von nur einem positionssensitiven Empfängerelement oder eine direkte Addition der Messsignale 57, 59 aufgrund der betragsmäßig unterschiedlichen Wirkung auf die beiden Elemente 44, 50 zu einem verfälschten Ergebnis führen.

Erfindungsgemäß werden jedoch die Messsignale 57, 59 durch entsprechende Auswerteeinrichtungen 56, 58 zunächst in binäre Signale 60, 62 umgewandelt. Die Auswerteeinrichtungen können dazu zum Beispiel Komparatoren umfassen. Jedes einzelne positionssensitive Element 44, 50 wird also zunächst vollständig ausgewertet. Die Ausgangssignale 60, 62 werden in einer Logikeinheit 64 verknüpft, um das endgültige Objektfeststellungssignal 66 zu erzeugen. Die logische Verknüpfung kann dabei z.B. wie folgt erfolgen.

Zunächst wird ein erster Detektionsmodus ("Hintergrundausblendung") betrachtet, bei dem die Auswerteeinrichtungen 56, 58 Ausgangssignale 60, 62 "ON" erzeugen sollen, wenn Empfangslicht 36, 38 auf die jeweils ersten Detektionszonen 46, 52 fällt. Für den Fall eines unkritischen Objekts 20 würde also jedes einzelne positionssensitive Element 44, 50 ein Ausgangssignal 60, 62 "ON" erzeugen, wenn sich das Objekt 20 im Tastbereich 12 befindet. Bei kritischen Objekten oder kritischem Hintergrund würde diese Information eines einzelnen positionssensitiven Empfängerelementes oder eine direkte Addition der Messsignale aus den geschilderten Gründen nicht verlässlich sein.

### Applikationsszenario kritisches Objekt/unkritischer Hintergrund:

- Verknüpfung: ODER (hier nur zur Erläuterung aufgeführt)
- Objektfeststellungssignal 66 positiv, wenn mindestens ein Ausgangssignal 60, 62 auf "ON" ist.
- Objektfeststellungssignal 66 negativ, wenn beide Ausgangssignale 60, 62 auf "OFF" stehen. In diesem Fall "sehen" die positionssensitiven Elemente 44, 50 den unkritischen Hintergrund, also z.B. das Förderband in der gedachten Trennlinie 16.

### Applikationsszenario kritischer Hintergrund/unkritisches Objekt:

- Verknüpfung: UND (hier nur zur Erläuterung aufgeführt)
- Objektfeststellungssignal 66 positiv, wenn beide Ausgangssignale 60, 62 auf "ON" sind. In diesem Fall dieses Applikationsszenarios "sehen" beide positionssensitiven Elemente 44, 50 das unkritische Objekt.
- Objektfeststellungssignal 66 negativ, wenn mindestens ein Ausgangssignal 60, 62 auf "OFF" steht.

### Applikationsszenario: Objekt kritisch/Hintergrund kritisch:

- Verknüpfung: Nach Art eines FLIP-FLOPs (erfindungsgemäß)
- Objektfeststellungssignal 66 positiv, sobald beide Ausgangssignale 60, 62 einmalig auf "ON" stehen.
- Objektfeststellungssignal 66 negativ, sobald beide Ausgangssignale 60, 62 einmalig auf "OFF" stehen.

Bei einem zweiten Detektionsmodus sollen die Auswerteeinrichtungen 56, 58 Ausgangssignale 60, 62 "ON" erzeugen, wenn sich kein Objekt 20 im Tastbereich befindet, also der Hintergrundbereich bzw. ein Förderband in der Trennlinie 16, frei sichtbar ist. Befindet sich jedoch ein als unkritisch einzustufendes Objekt im Tastbereich 12 vor der gedachten Trennlinie 16, so sollen die positionsempfindlichen Elemente 44, 50 bzw. die zugehörige Auswerteeinrichtungen 56, 58 Ausgangssignale 60, 62 "OFF" ausgeben (im Sinne "Tastbereich nicht frei"). Befindet sich also kein Objekt 20 im Vordergrundbereich 12, so werden bei unkritischem Hintergrund beide positionsempfindlichen Elemente 44, 50 für sich genommen Ausgangssignale "ON" liefern. Tritt ein unkritisches Objekt 20 in den Tastbereich 12 ein, werden beide positionsempfindlichen Elemente 44, 50 ein Signal "OFF" erzeugen.

Ähnlich wie für den obigen Fall der Hintergrundausblendung würde ein kontrastreiches Objekt 20, ein Objekt mit zumindest teilweise glänzenden Bereichen oder inhomogener Oberfläche oder ein entsprechend kritischer Hintergrund gegebenenfalls zu einer Verfälschung des Signals führen, wenn die Messsignale 57, 59, also z.B. die Fotoströme der positionssensitiven Elemente 44, 50, direkt addiert werden würden oder nur das Messsignal eines positionssensitiven Empfängerelements ausgewertet würde.

Im Folgenden werden für diesen zweiten Detektionsmodus wiederum für unterschiedliche Applikationsszenarien betrachtet.

### Applikationsszenario kritisches Objekt/unkritischer Hintergrund:

- Verknüpfung: ODER (hier nur zur Erläuterung aufgeführt)
- Objektfeststellungssignal positiv, wenn mindestens ein Ausgangssignal 60, 62 auf "OFF" steht.
- Objektfeststellungssignal negativ, wenn beide Ausgangssignale 60, 62 auf "ON" stehen. In diesem Fall dieses Applikationsszenarios "sehen" beide positionssensitiven Elemente 44, 50 den unkritischen Hintergrund.

### Applikationsszenario kritischer Hintergrund/unkritisches Objekt:

- Verknüpfung: UND (hier nur zur Erläuterung aufgeführt)
- Objektfeststellungssignal positiv, wenn beide Ausgangssignale 60, 62 auf "OFF" stehen. In diesem Fall dieses Applikationsszenarios "sehen" beide positionssensitiven Elemente 44, 50 das unkritische Objekt.
- Objektfeststellungssignal negativ, wenn mindestens eines der Ausgangssignale 60, 62 auf "ON" steht.

### Applikationsszenario: Objekt kritisch/Hintergrund kritisch

- Verknüpfung: Nach Art eines FLIP-FLOPs (erfindungsgemäß)
- Objektfeststellungssignal positiv, sobald beide Ausgangssignale 60, 62 einmalig auf "OFF" stehen.
- Objektfeststellungssignal negativ, sobald beide Ausgangssignale 60, 62 einmalig auf "ON" stehen.

Bei diesem zweiten Detektionsmodus, bei dem die Ausgangssignale positiv sind, wenn das zurückreflektierte/zurückremittierte Licht jeweils auf die zweite Detektionszone fällt (also einem Signal aus dem Hintergrund entspricht), ist außerdem - auch bei einem so stark reflektierenden Objekt im Tastbereich, dass die restremittierte oder diffus reflektierte Strahlung nicht mehr ausreichen würde, um eine sichere Messung durchzuführen - sichergestellt, dass eine verlässliche Information erhalten wird, ob der Tastbereich frei ist oder nicht.

Die Kompensation einer Schwerpunktsverschiebung des Lichts 36 bzw. 38 aufgrund z.B. eines kontrastreichen Objekts 20 oder eines Objekts mit zumindest teilweise glänzenden Bereichen oder solchen Hintergründen findet bei den erfindungsgemäßen Ausgestaltungen, insbesondere den beiden geschilderten Detektionsmodi, sicher und unabhängig davon statt, ob sich die Schwerpunktsverschiebung auf beiden positionsempfindlichen Elementen 44, 50 gleich stark auswirkt. Insbesondere auch für den Fall von Objekten mit zumindest teilweise glänzenden Bereichen ist damit das erfindungsgemäße Verfahren besonders sicher und robust.

In den beschriebenen Beispielen sind die Empfangsoptiken 40, 42 als gesonderte Linsen dargestellt. Die Empfangsoptiken 40, 42 können jedoch auch durch eine gemeinsame Anordnung, zum Beispiel eine ringförmige Linse, gebildet sein.

Die Beispiele wurden anhand der Verwendung von positionssensitiven Elementen (PSD) geschildert, die ein Stromsignal liefern, das von der Position des Lichtpunktes auf den Empfänger abhängt. Es sind auch andere Messelemente möglich, zum Beispiel Fotodiodenreihen, die auf die beiden Detektionszonen aufgeteilt werden, oder Elemente, die nur zwei Fotoelemente aufweisen, die die beiden Detektionszonen bilden.

Im vorliegenden Text werden die Ausgangssignale 60, 62 als "positiv" ("negativ") bzw. "ON" ("OFF") bezeichnet, wenn der Schwerpunkt des zurückreflektierten/zurückremittierten Lichts 36/38 als auf die erste (zweite) Detektionszone 46, 52 (48, 54) fallend detektiert wird. Diese Bezeichnungen dienen jedoch nur der einfachen Darstellung. Andere Bezeichnungen sind ebenso möglich (zum Beispiel "1", wenn die erste Detektionszone 46, 52 beleuchtet wird, und "2", wenn die zweite Detektionszone 48, 54 beleuchtet wird).

Die Trennlinie 16 zwischen Vordergrundbereich 12 und Hintergrundbereich 14 kann im Rahmen eines Teach-Prozesses (Konfigurationsprozess) wie folgt festgelegt werden. Ein bekanntes Objekt mit einer unkritischen Oberfläche wird in den Tastbereich 12 eingebracht und in Richtung der Trennlinie 16 bewegt. Die Auswerteeinheiten 56, 58 werden derart konfiguriert, dass sie aus den dabei entstehenden Messsignalen 57, 59 Ausgangssignale 60, 62 erzeugen, die genau dann von einem Zustand auf den anderen Zustand wechseln, wenn sich das unkritische bekannte Objekt gerade an der gewünschten Trennlinie 16 befindet.

Die Konfiguration kann dabei bei Verwendung von positionssensitiven Elementen als Empfängerelemente durch Festlegung eines Grenzstromsignales erfolgen, das das positionssensitive Element ausgibt, wenn Licht gerade von der Entfernung der Trennlinie 16 auf das Empfängerelement zurückreflektiert oder zurückremittiert wird. Bei Fotodiodenreihen als Empfängerelementen kann in dem Konfigurationsprozess festgelegt werden, welche der Fotodioden der jeweiligen Reihe einer ersten Detektionszone zugeordnet werden und welche Fotodioden der jeweiligen Fotodiodenreihe der zweiten Detektionszone. Werden Empfängerelemente eingesetzt, die nur aus zwei Fotoelementen besteht, die jeweils die erste und die zweite Detektionszone bilden, ist damit die Trennlinie 16 bereits festgelegt. Hier kann jedoch eine Verschiebung des Empfängerelementes durchgeführt werden, die inhärent auch eine Verschiebung der Grenze zwischen erster und zweiter Detektionszone bewirkt und daher auch zu einer Verschiebung der Trennlinie 16 führt.

Die Erfindung ist nicht auf die zwei Detektionsmodi beschränkt, die hier beispielhaft aufgeführt sind. Andere Detektionsmodi und Applikationsszenarios sind denkbar, zum Beispiel wenn Objekte unter Vernachlässigung des Vordergrundes im Hintergrund nachgewiesen werden sollen.

### Bezugszeichenliste

- 10: Überwachungsbereich
- 12: Tastbereich
- 14: Hintergrundbereich
- 16: gedachte Trennlinie
- 20: Objekt
- 30: Leuchtdiode
- 32: Sendelichtsystemachse
- 34: Sendeoptik
- 36, 38: zurückreflektiertes/zurückremittiertes Licht
- 40, 42: Empfangsoptik
- 44: positionssensitives Element
- 46: erste Detektionszone
- 48: zweite Detektionszone
- 50: positionssensitives Element
- 52: erste Detektionszone
- 54: zweite Detektionszone
- 56: Auswerteeinheit
- 57: Messsignal
- 58: Auswerteeinheit
- 59: Messsignal
- 60, 62: Ausgangssignal
- 64: Logikeinheit
- 66: Objektfeststellungssignal
- 70: Gehäuse

## Patentansprüche

1. Verfahren zur optischen Überwachung eines Überwachungsbereiches (10), bei dem
- Licht von einem Sendeelement (30) entlang einer Sendelichtsystemachse (32) in den Überwachungsbereich (10) gesendet wird,
- aus dem Überwachungsbereich (10) zurückreflektiertes/zurückremittiertes Licht (36) mit einem ersten Lichtempfänger (44) über einen ersten Empfangslichtpfad detektiert wird, wobei der erste Lichtempfänger (44) wenigstens zwei räumliche Detektionszonen (46, 48) umfasst, die so angeordnet sind, dass eine erste Detektionszone (46) zurückreflektiertes/zurückremittiertes Licht (36) empfängt, wenn sich ein diffus reflektierendes Objekt (20) in einem Tastbereich (12) des Überwachungsbereiches (10) befindet, und eine zweite Detektionszone (48) zurückreflektiertes/zurückremittiertes Licht empfängt, wenn sich ein diffus reflektierendes Objekt in einem Hintergrundbereich (14) des Überwachungsbereiches (10) befindet,
- aus dem Überwachungsbereich (10) zurückreflektiertes/zurückremittiertes Licht (38) mit einem zweiten Lichtempfänger (50) über einen zweiten Empfangslichtpfad hindurch detektiert wird, wobei der zweite Lichtempfänger (50) wenigstens zwei räumliche Detektionszonen (52, 54) umfasst, die so angeordnet sind, dass eine erste Detektionszone (52) zurückreflektiertes/zurückremittiertes Licht (38) empfängt, wenn sich ein diffus reflektierendes Objekt (20) in einem Tastbereich (12) des Überwachungsbereiches (10) befindet, und eine zweite Detektionszone (54) zurückreflektiertes/zurückremittiertes Licht empfängt, wenn sich ein diffus reflektierendes Objekt in einem Hintergrundbereich (14) des Überwachungsbereiches (10) befindet,
- ein erstes Ausgangssignal (60) des ersten Lichtempfängers (44) in Abhängigkeit davon erzeugt wird, ob sich der Schwerpunkt des in Richtung des ersten Lichtempfängers (44) zurückreflektierten/zurückremittierten Lichtes (36) in der ersten (46) oder der zweiten (48) Detektionszone des ersten Lichtempfängers (44) befindet, wobei das erste Ausgangssignal (60) nur einen von zwei möglichen Zuständen annehmen kann,
- ein zweites Ausgangssignal (62) des zweiten Lichtempfängers (50) in Abhängigkeit davon erzeugt wird, ob sich der Schwerpunkt des in Richtung des zweiten Lichtempfängers (50) zurückreflektierten/zurückremittierten Lichtes (38) in der ersten (52) oder der zweiten (54) Detektionszone des zweiten Lichtempfängers (50) befindet, wobei das zweite Ausgangssignal (62) nur einen von zwei möglichen Zuständen annehmen kann, und
- das erste und das zweite Ausgangssignal (60, 62) logisch miteinander verknüpft werden um ein Objektfeststellungssignal (66) zu erzeugen,
- wobei sich die Empfangslichtpfade auf unterschiedlichen Seiten der Sendelichtsystemachse (32) befinden,
**dadurch gekennzeichnet, dass**
- die logische Verknüpfung eine FLIP-FLOP-Verknüpfung ist,
- ein positives Ausgangssignal (60, 62) des Lichtempfängers (44, 50) erzeugt wird, wenn der Schwerpunkt des in die Richtung des zugehörigen Lichtempfängers zurückreflektierten/zurückremittierten Lichtes auf die erste Detektionszone (46, 52) des zugehörigen Lichtempfängers fällt, und
- ein positives Objektfeststellungssignal (66) erzeugt wird, sobald beide Ausgangssignale einmalig positiv sind und ein negatives Objektfeststellungssignal erzeugt wird, sobald beide Ausgangssignale einmalig negativ sind.

2. Verfahren zur optischen Überwachung eines Überwachungsbereiches (10), bei dem
- Licht von einem Sendeelement (30) entlang einer Sendelichtsystemachse (32) in den Überwachungsbereich (10) gesendet wird,
- aus dem Überwachungsbereich (10) zurückreflektiertes/zurückremittiertes Licht (36) mit einem ersten Lichtempfänger (44) über einen ersten Empfangslichtpfad detektiert wird, wobei der erste Lichtempfänger (44) wenigstens zwei räumliche Detektionszonen (46, 48) umfasst, die so angeordnet sind, dass eine erste Detektionszone (46) zurückreflektiertes/zurückremittiertes Licht (36) empfängt, wenn sich ein diffus reflektierendes Objekt (20) in einem Tastbereich (12) des Überwachungsbereiches (10) befindet, und eine zweite Detektionszone (48) zurückreflektiertes/zurückremittiertes Licht empfängt, wenn sich ein diffus reflektierendes Objekt in einem Hintergrundbereich (14) des Überwachungsbereiches (10) befindet,
- aus dem Überwachungsbereich (10) zurückreflektiertes/zurückremittiertes Licht (38) mit einem zweiten Lichtempfänger (50) über einen zweiten Empfangslichtpfad hindurch detektiert wird, wobei der zweite Lichtempfänger (50) wenigstens zwei räumliche Detektionszonen (52, 54) umfasst, die so angeordnet sind, dass eine erste Detektionszone (52) zurückreflektiertes/zurückremittiertes Licht (38) empfängt, wenn sich ein diffus reflektierendes Objekt (20) in einem Tastbereich (12) des Überwachungsbereiches (10) befindet, und eine zweite Detektionszone (54) zurückreflektiertes/zurückremittiertes Licht empfängt, wenn sich ein diffus reflektierendes Objekt in einem Hintergrundbereich (14) des Überwachungsbereiches (10) befindet,
- ein erstes Ausgangssignal (60) des ersten Lichtempfängers (44) in Abhängigkeit davon erzeugt wird, ob sich der Schwerpunkt des in Richtung des ersten Lichtempfängers (44) zurückreflektierten/zurückremittierten Lichtes (36) in der ersten (46) oder der zweiten (48) Detektionszone des ersten Lichtempfängers (44) befindet, wobei das erste Ausgangssignal (60) nur einen von zwei möglichen Zuständen annehmen kann,
- ein zweites Ausgangssignal (62) des zweiten Lichtempfängers (50) in Abhängigkeit davon erzeugt wird, ob sich der Schwerpunkt des in Richtung des zweiten Lichtempfängers (50) zurückreflektierten/zurückremittierten Lichtes (38) in der ersten (52) oder der zweiten (54) Detektionszone des zweiten Lichtempfängers (50) befindet, wobei das zweite Ausgangssignal (62) nur einen von zwei möglichen Zuständen annehmen kann, und
- das erste und das zweite Ausgangssignal (60, 62) logisch miteinander verknüpft werden um ein Objektfeststellungssignal (66) zu erzeugen,
- wobei sich die Empfangslichtpfade auf unterschiedlichen Seiten der Sendelichtsystemachse (32) befinden,
**dadurch gekennzeichnet, dass**
- die logische Verknüpfung eine FLIP-FLOP-Verknüpfung ist,
- ein positives Ausgangssignal (60, 62) des Lichtempfängers (44, 50) erzeugt wird, wenn der Schwerpunkt des in die Richtung des zugehörigen Lichtempfängers zurückreflektierten/zurückremittierten Lichtes auf die zweite Detektionszone (48, 54) des zugehörigen Lichtempfängers fällt, und
- ein positives Objektfeststellungssignal (66) erzeugt wird, sobald beide Ausgangssignale einmalig negativ sind und ein positives Objektfeststellungssignal erzeugt wird, sobald beide Ausgangssignale einmalig positiv sind.

3. Verfahren nach einem der Ansprüche 1 oder 2,
**dadurch gekennzeichnet,**
**dass** eine Trennlinie (16) zwischen dem Tastbereich (12) und einem Hintergrundbereich (14) durch einen elektronischen Teach-Prozess eingestellt wird.

4. Verfahren nach Anspruch 3,
**dadurch gekennzeichnet,**
**dass** zur Durchführung des Teach-Prozesses ein diffus reflektierendes/remittierendes Objekt in den Abstand der gewünschten Trennlinie (16) gebracht wird und die Detektionszonen (46, 48) des ersten Lichtempfängers (44) und die Detektionszonen (52, 54) des zweiten Lichtempfängers (50) so eingestellt werden, dass das von dem Objekt im Abstand der gewünschten Trennlinie (16) über die Empfangslichtpfade zurückreflektierte/zurückremittierte Licht auf die jeweilige Grenze zwischen der ersten und der zweiten Detektionszone fällt.

5. Lichttaster mit
- wenigstens einem Lichtsender (30) zum Aussenden eines Lichtsignales entlang einer Sendelichtsystemachse (32) in einen Überwachungsbereich (10),
- wenigstens einem ersten Lichtempfänger (44) zum Empfangen von aus dem Überwachungsbereich (10) zurückreflektierten/zurückremittierten Lichtes (36) über einen ersten Empfangslichtpfad, wobei der erste Lichtempfänger (44) wenigstens zwei räumliche Detektionszonen (46, 48) umfasst, die so angeordnet sind, dass eine erste Detektionszone (46) zurückreflektiertes/zurückremittiertes Licht empfängt, wenn sich ein diffus reflektierendes Objekt (20) in einem Tastbereich (12) des Überwachungsbereiches (10) befindet, und eine zweite Detektionszone (48) zurückreflektiertes/zurückremittiertes Licht empfängt, wenn sich ein diffus reflektierendes Objekt in einem Hintergrundbereich (14) des Überwachungsbereiches befindet,
- wenigstens einem zweiten Lichtempfänger (50) zum Empfangen von aus dem Überwachungsbereich (12) zurückreflektierten/zurückremittierten Lichtes (38) über einen zweiten Empfangslichtpfad, wobei der zweite Lichtempfänger (50) wenigstens zwei räumliche Detektionszonen (52, 54) umfasst, die so angeordnet sind, dass eine erste Detektionszone (52) zurückreflektiertes/zurückremittiertes Licht (38) empfängt, wenn sich ein diffus reflektierendes Objekt (20) in einem Tastbereich (12) des Überwachungsbereiches (10) befindet, und eine zweite Detektionszone (54) zurückreflektiertes/zurückremittiertes Licht empfängt, wenn sich ein diffus reflektierendes Objekt in einem Hintergrundbereich (14) des Überwachungsbereiches befindet,
- einer ersten Auswerteeinrichtung (56) zur Bildung eines ersten Ausgangssignales (60) aus dem Messsignal (57) des ersten Lichtempfängers (44), wobei das erste Ausgangssignal (60) nur einen von zwei möglichen Zuständen annehmen kann, und
- einer zweiten Auswerteeinrichtung (58) zur Bildung eines zweiten Ausgangssignales (62) aus dem Messsignal (59) des zweiten Lichtempfängers (50), wobei das zweite Ausgangssignal (62) nur einen von zwei möglichen Zuständen annehmen kann,
- wobei sich die Empfangslichtpfade auf unterschiedlichen Seiten der Sendelichtsystemachse (32) befinden,
**gekennzeichnet durch**
- eine Logikeinheit (64), die derart ausgestaltet ist, dass sie das erste und das zweite Ausgangssignal (60, 62) nach Art eines FLIP-FLOPs zur Erzeugung eines Objektfeststellungssignales (66) für die Durchführung eines Verfahrens gemäß einem der Ansprüche 1 bis 4 miteinander verknüpft.

6. Lichttaster nach Anspruch 5,
**gekennzeichnet durch**
eine Signalbildungseinheit, die die erste und die zweite Auswerteeinrichtung, vorzugsweise auch die Logikeinheit, umfasst.

7. Lichttaster nach einem der Ansprüche 5 oder 6,
**dadurch gekennzeichnet, dass**
die Empfangslichtpfade symmetrisch zu der Sendelichtsystemachse (32) angeordnet sind, und/oder
Empfangsoptiken (40, 42) umfassen.

## Claims

1. A method for the optical monitoring of a monitored zone (10),
wherein
- light is transmitted by a transmission element (30) along a transmission light system axis (32) into the monitored zone (10);
- light (36) reflected back/remitted back from the monitored zone (10) is detected by a first light receiver (44) via a first reception light path, with the first light receiver (44) comprising at least two spatial detection zones (46, 48) which are arranged such that a first detection zone (46) receives light (36) reflected back/remitted back when a diffusely reflective object (20) is located in a scanned zone (12) of the monitored zone (10) and a second detection zone (48) receives light reflected back/remitted back when a diffusely reflective object is located in a background zone (14) of the monitored zone (10);
- light (38) reflected back/remitted back from the monitored zone (10) is detected by a second light receiver (50) via a second reception light path, with the second light receiver (50) comprising at least two spatial detection zones (52, 54) which are arranged such that a first detection zone (52) receives light (38) reflected back/ remitted back when a diffusely reflective object (20) is located in a scanned zone (12) of the monitored zone (10) and a second detection zone (54) receives light reflected back/remitted back when a diffusely reflected object is located in a background zone (14) of the monitored zone (10);
- a first output signal (60) of the first light receiver (44) is produced in dependence on whether the center of the light (36) reflected back/remitted back in the direction of the first light receiver (44) is located in the first detection zone (46) or in the second detection zone (48) of the first light receiver (44), with the first output signal (60) only being able to adopt one of two possible states;
- a second output signal (62) of the second light receiver (50) is produced in dependence on whether the center of the light (38) reflected back/remitted back in the direction of the second light receiver (50) is located in the first detection zone (52) or in the second detection zone (54) of the second light receiver (50), with the second output signal (62) only being able to adopt one of two possible states; and
- the first and the second output signals (60, 62) are logically linked with one another to produce an object determination signal (66),
- wherein the reception light paths are located on different sides of the transmission light system axis (32),
**characterized in that**
- the logical operation is a FLIP-FLOP operation;
- a positive output signal (60, 62) of the light receiver (44, 50) is produced if the center of the light reflected back/remitted back in the direction of the associated light receiver is incident onto the first detection zone (46, 52) of the associated light receiver; and
- a positive object determination signal (66) is produced as soon as both output signals are once positive and a negative object determination signal is produced as soon as both output signals are once negative.

2. A method for the optical monitoring of a monitored zone (10), wherein
- light is transmitted by a transmission element (30) along a transmission light system axis (32) into the monitored zone (10);
- light (36) reflected back/remitted back from the monitored zone (10) is detected by a first light receiver (44) via a first reception light path, with the first light receiver (44) comprising at least two spatial detection zones (46, 48) which are arranged such that a first detection zone (46) receives light (36) reflected back/remitted back when a diffusely reflective object (20) is located in a scanned zone (12) of the monitored zone (10) and a second detection zone (48) receives light reflected back/remitted back when a diffusely reflective object is located in a background zone (14) of the monitored zone (10);
- light (38) reflected back/ remitted back from the monitored zone (10) is detected by a second light receiver (50) via a second reception light path, with the second light receiver (50) comprising at least two spatial detection zones (52, 54) which are arranged such that a first detection zone (52) receives light (38) reflected back/remitted back when a diffusely reflective object (20) is located in a scanned zone (12) of the monitored zone (10) and a second detection zone (54) receives light reflected back/remitted back when a diffusely reflected object is located in a background zone (14) of the monitored zone (10);
- a first output signal (60) of the first light receiver (44) is produced in dependence on whether the center of the light (36) reflected back/remitted back in the direction of the first light receiver (44) is located in the first detection zone (46) or in the second detection zone (48) of the first light receiver (44), with the first output signal (60) only being able to adopt one of two possible states;
- a second output signal (62) of the second light receiver (50) is produced in dependence on whether the center of the light (38) reflected back/remitted back in the direction of the second light receiver (50) is located in the first detection zone (52) or in the second detection zone (54) of the second light receiver (50), with the second output signal (62) only being able to adopt one of two possible states; and
- the first and the second output signals (60, 62) are logically linked with one another to produce an object determination signal (66),
- wherein the reception light paths are located on different sides of the transmission light system axis (32),
**characterized in that**
- the logical operation is a FLIP-FLOP operation;
- a positive output signal (60, 62) of the light receiver (44, 50) is produced if the center of the light reflected back/ remitted back in the direction of the associated light receiver is incident onto the second detection zone (48, 54) of the associated light receiver; and
- a positive object determination signal (66) is produced as soon as both output signals are once negative and a positive object determination signal is produced as soon as both output signals are once positive.

3. A method in accordance with claim 2,
**characterized in that**
a dividing line (16) between the scanned zone (12) and a background zone (14) is set by an electronic teach-in process.

4. A method in accordance with claim 3,
**characterized in that**
a diffusely reflective/remitting object is brought into the spacing of the desired dividing line (16) to carry out the teach-in process and the detection zones (46, 48) of the first light receiver (44) and the detection zones (52, 54) of the second light receiver (50) are set such that the light reflected back/remitted back by the object via the reception light paths in the spacing of the desired dividing line (16) is incident onto the respective border between the first and the second detection zones.

5. A light sensor comprising
- at least one light transmitter (30) for transmitting a light signal along a transmission light system axis (32) into a monitored zone (10);
- at least one first light receiver (44) for receiving light (36) reflected back/remitted back from the monitored zone (10) via a first reception light path, with the first light receiver (44) comprising at least two spatial detection zones (46, 48) which are arranged such that a first detection zone (46) receives light reflected back/remitted back when a diffusely reflective object (20) is located in a scanned zone (12) of the monitored zone (10) and a second detection zone (48) receives light reflected back/remitted back when a diffusely reflective object is located in a background zone (14) of the monitored zone;
- at least one second light receiver (50) for receiving light (38) reflected back/remitted from of the monitored zone (12) via a second reception light path, with the second light receiver (50) comprising at least two spatial detection zones (52, 54) which are arranged such that a first detection zone (52) receives light (38) reflected back/remitted back when a diffusely reflective object (20) is located in a scanned zone (12) of the monitored zone (10) and a second detection zone (54) receives light reflected back/remitted back when a diffusely reflective object is located in a background zone (14) of the monitored zone;
- a first evaluation unit (56) for forming a first output signal (60) from the measured signal (57) of the first light receiver (44), with the first output signal (60) only being able to adopt one of two possible states; and
- a second evaluation unit (58) for forming a second output signal (62) from the measured signal (59) of the second light receiver (50), with the second output signal (62) only being able to adopt one of two possible states,
- wherein the reception light paths are located at different sides of the transmission light system axis (32),
**characterized by**
- a logic unit (64) which is configured such that it links the first and second output signals (60, 62) to one another in the manner of a FLIP-FLOP for producing an object determination signal (66) for the carrying out of a method in accordance with any one of the claims 1 to 4.

6. A light sensor in accordance with claim 5,
**characterized by**
a signal forming unit which comprises the first and the second evaluation devices, preferably also the logic unit.

7. A light sensor in accordance with claim 5 or claim 5,
**characterized in that**
the reception light paths are arranged symmetrical to the transmission light system axis (32) and/or comprise reception optics

## Revendications

1. Procédé pour la surveillance optique d'une zone de surveillance (10), dans lequel
- on émet de la lumière depuis un élément émetteur (30) le long d'un axe systémique de lumière émise (32) vers la zone de surveillance (10),
- on détecte de la lumière réfléchie/réémise en retour (36) depuis la zone de surveillance (10) au moyen d'un premier récepteur de lumière (44) via un premier trajet de lumière reçue, ledit premier récepteur de lumière (44) comprenant au moins deux zones de détection spatiale (46, 48) qui sont agencées de telle manière qu'une première zone de détection (46) reçoit de la lumière réfléchie/réémise en retour (36) si un objet (20) réfléchissant de manière diffuse se trouve dans une zone de balayage (12) de la zone de surveillance (10) et qu'une seconde zone de détection (48) reçoit de la lumière réfléchie/réémise en retour si un objet réfléchissant de manière diffuse se trouve dans une zone d'arrière-plan (14) de la zone de surveillance (10),
- on détecte de la lumière réfléchie/réémise en retour (38) depuis la zone de surveillance (10) au moyen d'un second récepteur de lumière (50) via un second trajet de lumière reçue, ledit second récepteur de lumière (50) comprenant au moins deux zones de détection spatiale (52, 54) qui sont agencées de telle manière qu'une première zone de détection (52) reçoit de la lumière réfléchie/réémise en retour (38) si un objet (20) réfléchissant de manière diffuse ce trouve dans une zone de balayage (12) de la zone de surveillance (10), et qu'une seconde zone de détection (54) reçoit de la lumière réfléchie/réémise en retour si un objet réfléchissant de manière diffuse ce trouve dans une zone d'arrière-plan (14) de la zone de surveillance (10),
- un premier signal de sortie (60) du premier récepteur de lumière (44) est généré en fonction de savoir si le barycentre de la lumière réfléchie/réémise en retour (36) en direction du premier récepteur de lumière (44) se trouve dans la première (46) ou dans la seconde (48) zone de détection du premier récepteur de lumière (44), ledit premier signal de sortie (60) pouvant adopter seulement un état parmi deux états possibles,
- un second signal de sortie (62) du second récepteur de lumière (50) est généré en fonction de savoir si le barycentre de la lumière réfléchie/réémise en retour (38) en direction du second récepteur de lumière (50) se trouve dans la première (52) ou dans la seconde (54) zone de détection du second récepteur de lumière (50), ledit second signal de sortie (62) pouvant adopter seulement un état parmi deux états possibles, et
- le premier et le second signal de sortie (60, 62) sont chaînés l'un à l'autre de manière logique afin d'engendrer un signal de constatation d'objet (66),
- et les trajets de lumière reçue se trouvent sur des côtés différents de l'axe systémique (32) de la lumière émise,
**caractérisé en ce que**
- le chaînage logique est un chaînage de type "Flip-Flop",
- un signal de sortie positif (60, 62) du récepteur de lumière (44, 50) est engendré si le barycentre de la lumière réfléchie/réémise en retour en direction de récepteur de lumière associée tombe sur la première zone de détection (46, 52) du récepteur de lumière associé, et
- un signal de constatation d'objet positif (66) est engendré dès que les deux signaux de sortie sont une fois positifs, et un signal de constatation d'objet négatif est engendré des que les deux signaux de sortie sont une fois négatifs.

2. Procédé pour la surveillance optique d'une zone de surveillance (10), dans lequel
- on émet de la lumière depuis un élément émetteur (30) le long d'un axe systémique de lumière émise (32) vers la zone de surveillance (10),
- on détecte de la lumière réfléchie/réémise en retour (36) depuis la zone de surveillance (10) au moyen d'un premier récepteur de lumière (44) via un premier trajet de lumière reçue, ledit premier récepteur de lumière (44) comprenant au moins deux zones de détection spatiale (46, 48) qui sont agencées de telle manière qu'une première zone de détection (46) reçoit de la lumière réfléchie/réémise en retour (36) si un objet (20) réfléchissant de manière diffuse se trouve dans une zone de balayage (12) de la zone de surveillance (10) et qu'une seconde zone de détection (48) reçoit de la lumière réfléchie/réémise en retour si un objet réfléchissant de manière diffuse se trouve dans une zone d'arrière-plan (14) de la zone de surveillance (10),
- on détecte de la lumière réfléchie/réémise en retour (38) depuis la zone de surveillance (10) au moyen d'un second récepteur de lumière (50) via un second trajet de lumière reçue, ledit second récepteur de lumière (50) comprenant au moins deux zones de détection spatiale (52, 54) qui sont agencées de telle manière qu'une première zone de détection (52) reçoit de la lumière réfléchie/réémise en retour (38) si un objet (20) réfléchissant de manière diffuse ce trouve dans une zone de balayage (12) de la zone de surveillance (10), et qu'une seconde zone de détection (54) reçoit de la lumière réfléchie/réémise en retour si un objet réfléchissant de manière diffuse ce trouve dans une zone d'arrière-plan (14) de la zone de surveillance (10),
- un premier signal de sortie (60) du premier récepteur de lumière (44) est généré en fonction de savoir si le barycentre de la lumière réfléchie/réémise en retour (36) en direction du premier récepteur de lumière (44) se trouve dans la première (46) ou dans la seconde (48) zone de détection du premier récepteur de lumière (44), ledit premier signal de sortie (60) pouvant adopter seulement un état parmi deux états possibles,
- un second signal de sortie (62) du second récepteur de lumière (50) est généré en fonction de savoir si le barycentre de la lumière réfléchie/réémise en retour (38) en direction du second récepteur de lumière (50) se trouve dans la première (52) ou dans la seconde (54) zone de détection du second récepteur de lumière (50), ledit second signal de sortie (62) pouvant adopter seulement un état parmi deux états possibles, et
- le premier et le second signal de sortie (60, 62) sont chaînés l'un à l'autre de manière logique afin d'engendrer un signal de constatation d'objet (66),
- et les trajets de lumière reçue se trouvent sur des côtés différents de l'axe systémique (32) de la lumière émise,
**caractérisé en ce que**
- le chaînage logique est un chaînage de type "Flip-Flop",
- un signal de sortie positif (60, 62) du récepteur de lumière (44, 50) est engendré si le barycentre de la lumière réfléchie/réémise en retour en direction de récepteur de lumière associée tombe sur la seconde zone de détection (48, 54) du récepteur de lumière associé, et
- un signal de constatation d'objet positif (66) est engendré dès que les deux signaux de sortie sont une fois négatifs, et un signal de constatation d'objet positif est engendré des que les deux signaux de sortie sont une fois positifs.

3. Procédé selon l'une des revendications 1 ou 2,
**caractérisé en ce qu'**on établit une ligne de séparation (16) entre la zone de balayage (12) et une zone d'arrière-plan (14) par un processus d'apprentissage électronique.

4. Procédé selon la revendication 3,
**caractérisé en ce que**
pour exécuter le processus d'apprentissage, on amène un objet réfléchissant/réémettant de manière diffuse à la distance de la ligne de séparation souhaitée (16) et on règle les zones de détection (46, 48) du premier récepteur de lumière (44) et les zones de détection (52, 54) du second récepteur de lumière (50) de telle façon que la lumière réfléchie/réémise en retour depuis l'objet à la distance de la ligne de séparation souhaitée (16) via les trajets de lumière reçue tombe sur la frontière respective entre la première et la seconde zone de détection.

5. Détecteur de lumière comprenant
- au moins un émetteur de lumière (30) pour émettre un signal lumineux le long d'un axe systémique de lumière émise (32) vers une zone de surveillance (10),
- au moins un récepteur de lumière (44) pour recevoir de la lumière réfléchie/réémise en retour (36) depuis la zone de surveillance (10) via un premier trajet de lumière reçue, ledit premier récepteur de lumière (44) comprenant au moins deux zones de détection spatiale (46, 48) qui sont agencées de telle façon qu'une première zone de détection (46) reçoit de la lumière réfléchie/réémise en retour si un objet réfléchissant de manière diffuse (20) se trouve dans une zone de balayage (12) de la zone de surveillance (10), et qu'une seconde zone de détection (48) reçoit de la lumière réfléchie/réémise en retour si un objet réfléchissant de manière diffuse ce trouve dans une zone d'arrière-plan (14) de la zone de surveillance,
- au moins un second récepteur de lumière (50) pour recevoir de la lumière réfléchie/réémise en retour (38) depuis la zone de surveillance (10) via un second trajet de lumière reçue, ledit second récepteur de lumière (50) comprenant au moins deux zones de détection spatiale (52, 54) qui sont agencées de telle façon qu'une première zone de détection (52) reçoit de la lumière réfléchie/réémise en retour (38) si un objet réfléchissant de manière diffuse (20) se trouve dans une zone de balayage (12) de la zone surveillance (10), et qu'une seconde zone de détection (54) reçoit de la lumière réfléchie/réémise en retour si un objet réfléchissant de manière diffuse ce trouve dans une zone d'arrière-plan (14) de la zone de surveillance,
- un premier système d'évaluation (56) pour former un premier signal de sortie (60) à partir du signal de mesure (57) du premier récepteur de lumière (44), ledit premier signal de sortie (60) pouvant adopter seulement un état parmi deux états possibles, et
- un second système d'évaluation (58) pour former un second signal de sortie (62) à partir du signal de mesure (59) du second récepteur de lumière (50), ledit second signal de sortie (62) pouvant adopter seulement un état parmi deux états possibles,
- et les trajets de lumière reçue se trouvent sur des côtés différents de l'axe systémique (32) de la lumière émise,
**caractérisé par**
- une unité logique (64), qui est conçue de telle façon qu'elle effectue un chaînage du premier et du second signal de sortie (60, 62) l'un avec l'autre à la manière d'un dispositif de type "Flip-Flop" pour engendrer un signal de constatation d'objet (66) pour la mise en oeuvre d'un procédé selon l'une des revendications 1 à 4.

6. Capteur de lumière selon la revendication 5,
**caractérisé par** une unité de formation de signaux, qui englobe le premier et le second système d'évaluation, et de préférence également l'unité logique.

7. Capteur de lumière selon l'une des revendications 5 ou 6,
**caractérisé en ce que** les trajets de lumière reçue sont agencés symétriquement par rapport à l'axe systémique (32) de la lumière émise, et/ou
incluent des optiques de réception (40, 42).
